# EUROPÄISCHE PATENTSCHRIFT

(11) **EP 0 613 535 B1**
(45) Veröffentlichungstag und Bekanntmachung des Hinweises auf die Patenterteilung: **25.10.1995**
(21) Anmeldenummer: 92923356.7
(22) Anmeldetag: 19.11.1992
(51) Int. Cl.: F16K 7/14, F15C 5/00

(54) **MIKROMECHANISCHES VENTIL FÜR MIKROMECHANISCHE DOSIEREINRICHTUNGEN**
MICROMECHANICAL VALVE FOR MICROMECHANICAL DOSING DEVICES
SOUPAPE MICROMECANIQUE POUR DISPOSITIFS DE DOSAGE MICROMECANIQUES

(30) Priorität: 23.11.1991 DE 4138491
(43) Veröffentlichungstag der Anmeldung: 07.09.1994
(73) Patentinhaber: JOSWIG, Jürgen, D-01157 Dresden (DE)
(72) Erfinder: JOSWIG, Jürgen, D-01157 Dresden (DE)
(74) Vertreter: Schmidt, Ursula, Dipl.-Ing. (FH)
(86) Internationale Anmeldenummer: DE9200976
(87) Internationale Veröffentlichungsnummer: WO9310385

(56) Entgegenhaltungen:
- PATENT ABSTRACTS OF JAPAN vol. 015, no. 290 (M-1139)1991; & JP-A-31 03 680

## Beschreibung

Die Erfindung betrifft ein mikromechanisches Ventil für mikromechanische Dosiereinrichtungen, das aus mindestens drei übereinander angeordneten und örtlich unlösbar miteinander verbundenen Schichten besteht, die mit einem Betätigungselement gekoppelt sind, wobei die Schichten flächige Strukturierungen zur Bildung von Ein- und Auslaßkanälen bzw. Ein- und Auslaßkammern aufweisen, die äußeren Schichten als eine Grundschicht und eine Deckschicht und die zwischen Ein- und Auslaß angeordnete Schicht als eine dünne elastische Ventilmembran ausgebildet sind.

Solche mikromechanischen Ventile sind insbesondere für den Einsatz in der Medizintechnik, zum Beispiel zur Medikamentendosierung oder in der Laboranalysetechnik, aber auch in der Kfz-Technik, der Raumfahrttechnik oder der Drucktechnik vorgesehen.

Aus der Literatur sind mikromechanische Ventile in Mehrschichtenstruktur bekannt, die mittels Fertigungstechnologien, wie sie in der Halbleitertechnik angewendet werden, herstellbar sind. Diese Ventile besitzen zwei Druckmittelanschlüsse und einen dazwischen geschalteten Ventilsitz, dem ein Schließglied zugeordnet ist. Dabei ist das Schließglied durch elektrische oder thermische Betätigungsmittel auslenkbar und entgegen der elektrischen oder thermischen Betätigungsmittel mittels federnder Membran, die mit dem Schließglied fest verbunden ist, bewegbar. Die federnde Membran ist in eine der Schichten integriert und grenzt an einen mit Druckmittel beaufschlagten Raum. Für den Druckkraftausgleich ist eine der druckbeaufschlagten Membran entgegenwirkende Druckausgleichsfläche angeordnet.

Mit dieser Lösung wird jedoch keine vollständige Druckkompensation sondern nur ein teilweiser Druckausgleich erreicht, da die Kompensationsfläche deutlich kleiner als die zu kompensierende Fläche ist. Nachteilig ist auch das schlechte Dichtverhalten der Ventile aufgrund des großen Umfanges des Ventilspaltes, da das Schließglied die Einlaßkammer über ihre gesamte Breite abdichten muß. Außerdem wird bei Ventilbetätigung eine instabiler Zustand durchlaufen, da der Unterdruck unter der Kompensationsfläche im Moment des Öffnens schlagartig abgebaut wird. Die dabei entstehenden dynamischen Lasten wirken sich an den Verbindungstellen von Ventilsitz und Kompensationsfläche aus, was die Lebenserwartung der Ventile negativ beeinflußt. Die Herstellung solcher Ventile erfordert eine aufwendige und komplizierte Strukturierungs- und Montagetechnologie, wobei nur eine enge Fehlertolerierung zulässig ist.

Auch mit einer weiteren bekannten Lösung werden diese Nachteile nicht ausgeschlossen. Mit dem Patent Abstract of Japan JP-A-3103680 wird eine weitere technische Lösung offenbart, der ebenfalls der Oberbegriff des ersten Patentanspruches zugrundeliegt und ein selbstöffnendes bzw. -schließendes Mikroventil betrifft. Hiernach ist die elastische Ventilmembran in Richtung Auslaß gekrümmt ausgebildet und verschließt im geschlossenen Zustand des Ventils die Einlaßöffnung, die in der Deckschicht im Bereich der Ventilmembran angeordnet ist. Die Selbstöffnung bzw. -schließung des Ventils geschieht dadurch, daß ein Betätigungselement, hier in Form einer Erregerspule, in Verbindung mit einer auf der Ventilmembran angeordneten magnetischen Schicht je nach Stromrichtung ein Verbiegen der Siliziummembran bewirkt und dadurch die Einlaßöffnung öffnet oder schließt. Dies geschieht mehr oder weniger schlagartig, außerdem erfolgt auch nur ein teilweiser Druckausgleich und keine vollständige Druckkompensation. Für den Einsatz speziell in der Medizintechnik ist dieses Ventil ungeeignet.

Es ist deshalb Aufgabe der Erfindung, ein mikromechanisches Ventil für mikromechanische Dosiereinrichtungen zu entwickeln, das mit hoher Zuverlässigkeit und stabiler Arbeitsweise Medien in kleinster Dosierung über einen langen Zeitraum variabel zu- und abschaltet, wobei das Ventil konstruktiv so aufgebaut ist, daß es durch gleichmäßige Ansteuerung mit geringem Energiebedarf den Einsatz von kleinen, effektiven Antriebselementen ermöglicht, geringen Platzbedarf benötigt und mittels einfacher Montagetechnologien herstellbar ist.

Erfindungsgemäß wird die Aufgabe dadurch gelöst, daß die dünne, elastische Ventilmembran mit beidseitig eingearbeiteten kanal- und kammerbildenden Strukturen für Ein- und Auslaß ausgebildet ist und einen mittigen Durchgang aufweist. Dabei ist die Ventilmembran in ihrem mittleren Bereich mit der als dünne Antriebsmembran ausgebildeten Deckschicht unlösbar verbunden und liegt mit ihrem mittleren Bereich nur im geschlossenen Zustand des Ventils auf der Innenfläche der Grundschicht auf. Das Einfließen des Mediums in das Ventil erfolgt über Einlaßkanal, Einlaßkammer bis in den mittigen Durchgang, während der Durchfluß des Mediums mit Öffnen des Ventils weiter durch Auslaßkammer und Auslaßkanal erfolgt. Des weiteren ist das Betätigungselement an der Außenfläche der dünnen Antriebsmembran angeordnet.

Nach der weiteren Ausführung der erfindungsgemäßen Lösung sind in beide Seiten der Trennschicht sämtliche kanal- und kammerbildenden Strukturen für Ein- und Auslaß so eingearbeitet, daß ihre Flächenschwerpunkte übereinander liegen und die verbleibende Restschicht die Ventilmembran bildet. Dabei besitzt die Einlaßkammer im wesentlichen die gleiche Form und Größe wie die Auslaßkammer.

Nach einer weiteren Ausführungsform der Erfindung ist die Einlaßkammer zwischen Antriebsmembran und Ventilmembran und die Auslaßkammer zwischen Ventilmembran und Grundschicht angeordnet. Ein- und Auslaßkanal liegen sich versetzt gegenüber.

Des weiteren ist im mittleren Bereich der Ventilmembran rings um den als Durchgangsloch ausgebildeten Durchgang mindestens ein, in die Einlaßkammer bis zur Antriebsmembran ragendes Verbindungselement angeordnet und unlösbar mit der Antriebsmembran verbunden. Auslaßseitig ist im mittleren Bereich der Ventilmembran rings um das Durchgangsloch eine Ventilwall angeordnet, der im nichtbetätigten Zustand an der Innenfläche der Grundschicht anliegt.

Bei einer weiteren Ausführungsform ist zwischen der Auflagefläche des Ventilwalles und der Innenfläche der Grundschicht eine dünne Schicht aus nichtbondbarem Material, wie Siliziumoxid oder Siliziumnitrit, angeordnet.

Nach einer weiteren Ausführung der Erfindung sind Grundschicht, Ventilmembran und Antriebsmembran vorzugsweise mittels anodischem Bonden unlösbar miteinander verbunden. Dabei bestehen die Grundschicht und die Antriebsmembran vorzugsweise aus einem thermisch angepaßten Glasmaterial und die Ventilmembran aus einen halbleitenden Siliziumsubstrat.

Nach einer anderen Fortbildung der Erfindung besteht die Deckschicht aus einem halbleitenden Siliziumsubstrat, in deren äußere Fläche eine Aussparung für das Betätigungselement eingearbeitet ist, die restliche Schicht die Antriebsmembran bildet und Ein- und Auslaßkammer in Form und Größe unterschiedlich gestaltet sind. Deck- und Trennschicht sind dabei mittels Waferbonden und die Trennschicht mit der Grundschicht mittels anodischem Bonden unlösbar miteinander verbunden.

Als Betätigungselemente sind piezoelektrische Membrananregungselemente, vorzugsweise in Form einer auf die Antriebsmembran aufgebrachten Piezoscheibe, aber auch thermoelektrische oder elektrostatische Ansteuerungsvarianten vorgesehen.

Die Erfindung soll nachfolgend anhand eines Ausführungsbeispieles näher erläutert werden. Die dazugehörigen Zeichnungen zeigen in
- Fig.1: eine Ausführungsform des erfindungsgemäßen mikromechanischen Ventils in schematischer Schnittdarstellung,
- Fig.2: eine andere Ausführungsform des erfindungsgemäßen Ventils in schematischer Schnittdarstellung,
- Fig.3: eine Ansicht auf die Ventilmembran einlaßseitig und
- Fig.4: eine Ansicht auf die Ventilmembran auslaßseitig.

Das Ausführungsbeispiel beschreibt Ventilvarianten, die speziell für den Einsatz in der Medizintechnik, im Bereich der Mikrodosierung von Medikamenten vorgesehen sind. Die Wirkstoffdosiersysteme sollen dabei ex- oder intern, festprogrammiert, gesteuert oder geregelt den Wirkstoff in der für die Therapie erforderlichen Menge und Qualität sowie dem vorgegebenen Zeitplan applizieren. Im Vordergrund stehen sowohl die möglichst gute Anpassung an physiologische Gegebenheiten der Patienten, zum Beispiel bei der Insulintherapie als auch eine optimale Prozeßführung, wie sie vor allem bei der Schmerztherapie notwendig ist.

Daraus ergeben sich hohe Anforderungen, die insbesondere auch die einzusetzenden mikromechanischen Ventile betreffen und vor allem in einer hohen Systemzuverlässigkeit, einer weiteren Miniaturisierung der Elemente, im optimalen Materialeinsatz und geringem Energieverbrauch liegen.

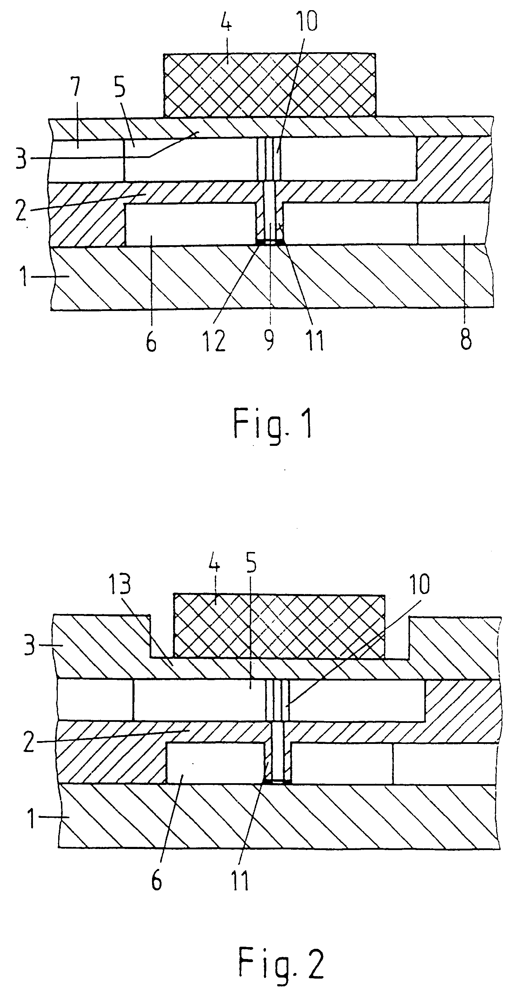

Nach Fig.1 besteht das erfindungsgemäße mikromechanische Ventil aus drei übereinander angeordneten und mittels anodischem Bonden unlösbar miteinander verbundenen Schichten. Die Deckschicht, die als dünne Antriebsmembran 3 ausgebildet ist und die Grundschicht 1, sind beide aus einem thermisch angepaßten Glasmaterial hergestellt. An der Außenfläche der Antriebsmembran 3 ist ein Betätigungselement 4 in Form eines piezoelektrischen Elementes aufgeklebt, das die Ansteuerung des Ventils übernimmt.

Beide Schichten 1 und 3 sind fest mit der als dünne Ventilmembran 2 ausgebildeten Trennschicht verbunden. Sie ist aus einem Siliziumsubstrat gefertigt, wie es aus der Halbleitertechnik bekannt ist. In beide Seiten der Trennschicht sind sämtliche kanal- und kammerbildenden Strukturen eingearbeitet, derart, daß - entsprechend der Darstellung nach Fig.1 - über die gesamte wirksame Breite des piezoeletrischen Elementes 4 unterhalb der Antriebsmembran 3 eine Einlaßkammer 5 und über der Grundschicht 1 eine Auslaßkammer 6 angeordnet sind. Die Flächenschwerpunkte beider Kammern 5 und 6 liegen übereinander. Die im aktiven Bereich der Trennschicht übrigbleibende Schichtdicke wirkt als Ventilmembran 2. Der Einlaßkanal 7 ist seitlich zwischen Antriebsmembran 3 und Ventilmembran 2 und der Auslaßkanal 8 versetzt gegenüberliegend zwischen Ventilmembran 2 und Grundschicht 1 angeordnet. Der seitliche Ein- und Auslaß sichert damit den Einsatz des Ventils innerhalb komplexer Systeme.

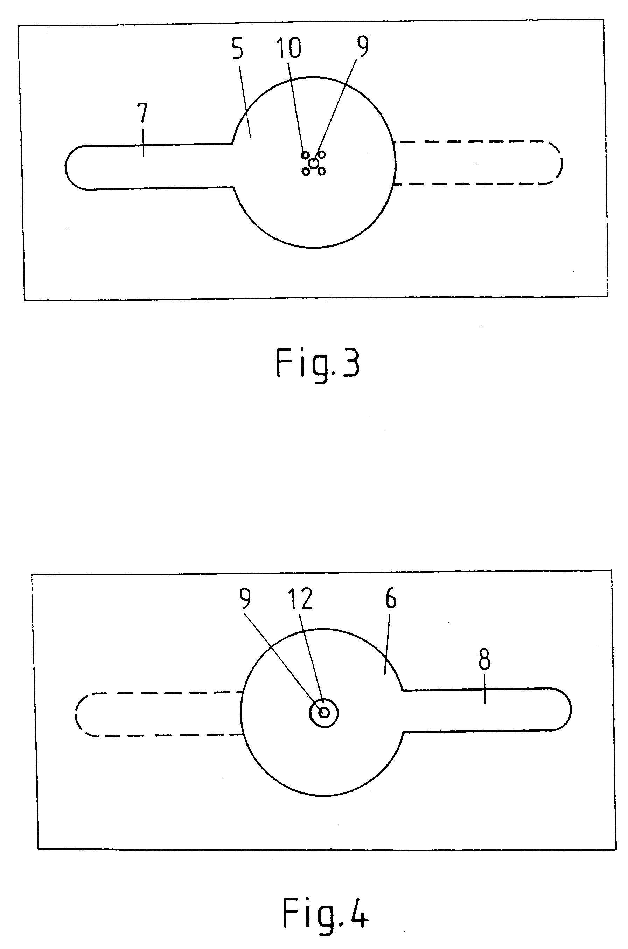

Wie in Fig. 3 und 4 dargestellt, weist die Ventilmembran 2 ein mittiges Durchgangsloch 9 auf und einlaßseitig rings um das Durchgangsloch 9 mehrere, in Abstand zueinander angeordnete, zylinderförmige Verbindungselemente 10, die durch die Einlaßkammer 5 ragen und mit der Antriebsmembran 3 fest verbunden sind. Auslaßseitig ist rings um das Durchgangsloch 9 ein Ventilwall 11 angeordnet, der im geschlossenen Zustand an der Innenfläche der Grundschicht 1 anliegt. Um zu verhindern, daß während des Bondprozesses der Ventilwall 11 unlösbar mit der Grundschicht 1 verbunden wird, ist auf die an der Grundschicht 1 anliegenden Fläche des Ventilwall 11, eine dünne Schicht 12 aus Siliziumoxid aufgebracht. Damit wird außerdem erreicht, daß das Ventil im geschlossenen Zustand sicher abdichtet.

Die Funktionsweise des Ventils ist folgende: Im Ruhezustand liegt der Ventilwall 11 in der Auslaßkammer 6 auf der Grundschicht 1 auf, das Ventil ist geschlossen. Der Druck des einfließenden Mediums wirkt gegen beide ungefähr gleichgroßen Druckflächen von Antriebs- und Ventilmembran 3,2, die in der Mitte fest miteinander verbunden sind. Damit erfolgt der Druckausgleich des Eingangsdruckes, der unabhängig ist von der Lage des Ventilwalls 11. Mit Ansteuerung durch das piezoelektrische Elememt 4 werden das piezoelektrische Element 4, Antriebsmembran 3 und die Ventilmembran 2 gekrümmt oder gebogen, der Ventilwall 11 wird von der Grundschicht 1 abgehoben und der Durchfluß von der Einlaßkammer 5 in Auslaßkammer 6 ist frei. Der Öffnungszustand des Ventils ist somit nur noch von der Antriebsspannung des piezoelektrischen Elementes 4 abhängig. Die Antriebsleistung kann auf das für die Auslenkung der Ventilmembran 2 in geöffneten Zustand notwendige Maß begrenzt werden, was einfache und kleine Konstruktionen für Betätigunselemente 4 zuläßt.

In Fig. 2 ist eine weitere Ausführungsform des erfindungsgemäßen mikromechanischen Ventils dargestellt. Hiernach ist eine variable Gestaltung des Flächenverhältnisses von Antriebs- und Ventilmembran 3,2 dadurch möglich, daß die Deckschicht aus einer Siliziumsubstratschicht besteht, aus deren äußerer Fläche die wirksame, dünne Antriebsmembranfläche 13 herausgearbeitet ist, wobei die Aussparung gleichzeitig der Aufnahme der piezoelektrischen Scheibe 4 dient. Die unlösbare Verbindung der drei Schichten geschieht derart, daß die Deckschicht mittels Waferbonden mit der Trennschicht und die Trennschicht mit der Grundschicht durch anodisches Bonden miteinander verbunden werden. Ein- und Auslaßkammer 5,6 können in ihren Abmessungen unterschiedlich groß sein. Damit wird ebenfalls ein vollständiger Ausgleich des Einflusses des Eingangsdruckes möglich. Außerdem können im Rahmen der konstruktiven Möglichkeiten beliebige Abhängigkeiten der Lage des Ventilwalles 11 von Eingangsdruck erzielt werden.

Mit dem erfindungsgemäßen mikromechanischen Ventil wird verhindert, daß im Moment des Öffnens des Ventils ein instabiler Zustand durch plötzlichen Abbau des Unterdruckes in der Auslaßkammer 6 entsteht, da das Medium erst über das Durchgangsloch 9 die Auslaßkammer 6 erreicht. Die Herstellung des Ventils ist mit normalem montagetechnischen Aufwand möglich, die einzusetzenden Betätigungselemente können je nach Anwendungsfall und benötigter Parameter ausgewählt werden. Es sind sowohl piezoelektrische, als auch thermoelektrische oder elektrostatische Betätigungselemente 4 in einfachster Form und kleinster Ausführung einsetzbar.

### Bezugszeichenliste

- 1: Grundschicht
- 2: Ventilmembran
- 3: Antriebsmembran
- 4: Betätigungselement
- 5: Einlaßkammer
- 6: Auslaßkammer
- 7: Einlaßkanal
- 8: Auslaßkanal
- 9: Durchgangsloch
- 10: Verbindungselemente
- 11: Ventilwall
- 12: Schicht
- 13: Antriebsmembranfläche

## Patentansprüche

1. Mikromechanisches Ventil für mikromechanische Dosiereinrichtungen, bestehend aus mindestens drei übereinander angeordneten und örtlich unlösbar miteinander verbundenen Schichten, die mit einem Betätigungselement (4) gekoppelt sind, wobei die Schichten flächige Strukturierungen zur Bildung von Ein- und Auslaßkanälen (7, 8) bzw. Ein- und Auslaßkammern (5, 6) aufweisen, die äußeren Schichten als eine Grundschicht (1) und eine Deckschicht und die zwischen Ein- und Auslaß angeordnete Schicht als eine dünne elastische Ventilmembran (2) ausgebildet sind, **dadurch gekennzeichnet,** daß die dünne, elastische Ventilmembran (2) mit beidseitig eingearbeiteten kanal- und kammerbildenden Strukturen für Ein- und Auslaß ausgebildet ist,
daß die Ventilmembran (2) einen mittigen Durchgang (9) aufweist,
daß die Ventilmembran (2) in ihrem mittleren Bereich mit der als dünne Antriebsmembran (3, 13) ausgebildeten Deckschicht unlösbar verbunden ist,
daß die Ventilmembran (2) mit ihrem mittleren Bereich nur im geschlossenen Zustand des Ventils auf der Innenfläche der Grundschicht (1) aufliegt, so daß das Einfließen des Mediums in das Ventil über Einlaßkanal (7), Einlaßkammer (5) bis in den mittigen Durchgang (9) und der Durchfluß des Mediums mit Öffnen des Ventils weiter durch Auslaßkammer (6) und Auslaßkanal (8) erfolgt,
und daß das Betätigungselement (4) an der Außenfläche der dünnen Antriebsmembran (3, 13) angeordnet ist.

2. Mikromechanisches Ventil nach Anspruch 1, **dadurch gekennzeichnet,** daß die elastische Ventilmembran (2) dadurch gebildet wird, daß in beide Seiten der Trennschicht sämtliche kanal- und kammerbildenden Strukturen für Ein- und Auslaß so eingearbeitet sind, daß ihre Flächenschwerpunkte übereinander liegen.

3. Mikromechanisches Ventil nach Anspruch 1 und 2, **dadurch gekennzeichnet**, daß Ein- und Auslaßkammer (5,6) im wesentlichen gleiche Form und Größe aufweisen.

4. Mikromechanisches Ventil nach Anspruch 1 bis 3, **dadurch gekennzeichnet,** daß die Einlaßkammer zwischen Antriebsmembran (3) und Ventilmembran (2) und die Auslaßkammer (6) zwischen Ventilmembran (2) und Grundschicht (1) angeordnet ist und daß sich der Einlaßkanal (7) und der Auslaßkanal (8) seitlich versetzt gegenüberliegen.

5. Mikromechanisches Ventil nach Anspruch 1, **dadurch gekennzeichnet,** daß im mittleren Bereich der Ventilmembran (2) rings um den als Durchgangsloch (9) ausgebildeten Durchgang mindestens ein, in die Einlaßkammer (5) bis zur Antriebsmembran (3) ragendes , in Abstand zueinander angeordnetes Verbindungselement (10) unlösbar mit der Antriebsmembran (3) verbunden ist.

6. Mikromechanisches Ventil nach Anspruch 1 und 5, **dadurch gekennzeichnet**, daß im mittleren Bereich der Ventilmembran (2) rings um das Durchgangsloch (9) auslaßseitig ein Ventilwall (11) angeordnet ist, der im nichtbetätigten Zustand an der Innenfläche der Grundschicht (1) anliegt.

7. Mikromechanisches Ventil nach Anspruch 1 und 6, **dadurch gekennzeichnet**, daß zwischen der Auflagefläche des Ventilwalls (11) und der Innenfläche der Grundschicht (1) eine dünne Schicht (12) aus nichtbondbarem Material, wie Siliziumoxid oder Siliziumnitrit, angeordnet ist.

8. Mikromechanisches Ventil nach Anspruch 1 bis 7, **dadurch gekennzeichnet,** daß Grundschicht (1), Ventilmembran (2) und Antriebsmembran (3) vorzugsweise mittels anodischem Bonden unlösbar miteinander verbunden sind.

9. Mikromechanisches Ventil nach Anspruch 1 bis 8, **dadurch gekennzeichnet,** daß Grundschicht (1) und Antriebsmembran (3) vorzugsweise aus einem thermisch angepaßten Glasmaterial und die Ventilmembran (2) aus einem halbleitenden Siliziumsubstrat bestehen.

10. Mikromechanisches Ventil nach Anspruch 1, **dadurch gekennzeichnet,** daß die Deckschicht aus einem halbleitendem Siliziumsubstrat besteht, in deren äußere Fläche eine Aussparung für das Betätigungselement (4) eingearbeitet ist, die restliche Schicht die Antriebsmembranfläche (13) bildet und Ein- und Auslaßkammer (5,6) in Form und Größe unterschiedlich ausgebildet sind.

11. Mikromechanisches Ventil nach Anspruch 10, **dadurch gekennzeichnet,** daß Deck- und Trennschicht mittels Waferbonden und die Trennschicht mit der Grundschicht durch anodisches Bonden unlösbar verbunden sind.

12. Mikromechanisches Ventil nach Anspruch 1 bis 11, **dadurch gekennzeichnet,** daß als Betätigungselement (4) ein piezoelektrisches Membrananregungselement, vorzugsweise in Form einer Piezoscheibe durch Aufkleben auf die Außenfläche der Antriebsmembran (3), angeordnet ist.

13. Mikromechanisches Ventil nach Anspruch 1 bis 12, **dadurch gekennzeichnet**, daß zur Ansteuerung der Ventilmembran (2) thermoelektrische oder elektrostatische Membrananregungselemente an der Antriebsmembran (3) angeordnet sind.

## Claims

1. Micromechanical valve for micromechanical dosing devices, consisting of at least three layers which are arranged one above the other, are connected locally unreleasably to one another and are coupled to an actuation element (4), the layers having planar structures for forming inlet and outlet channels (7, 8) or inlet and outlet chambers (5, 6), the outer layers being designed as a base layer (1) and a cover layer and the layer arranged between the inlet and outlet being designed as a thin elastic valve diaphragm (2), characterized in that the thin elastic valve diaphragm (2) is designed with channel-forming and chamber-forming structures for inlet and outlet formed in both sides, in that the valve diaphragm (2) has a centre passage (9), in that the valve diaphragm (2) is connected in its central region unreleasably to the cover layer designed as a thin drive diaphragm (3, 13), in that the valve diaphragm (2) rests with its central region on the inner surface of the base layer (1), only when the valve is in the closed state, so that the flowing-in of the medium into the valve takes place via inlet channel (7), inlet chamber (5) as far as the centre passage (9), and, on opening of the valve, the throughflow of the medium takes place further through outlet chamber (6) and outlet channel (8), and in that the actuation element (4) is arranged on the outer surface of the thin drive diaphragm (3, 13).

2. Micromechanical valve according to Claim 1, characterized in that the elastic valve diaphragm (2) is formed in that all channel-forming and chamber-forming structures for inlet and outlet are formed in both sides of the separating layer such that the centres of gravity of their areas lie one above the other.

3. Micromechanical valve according to Claims 1 and 2, characterized in that inlet and outlet chamber (5, 6) have essentially the same shape and size.

4. Micromechanical valve according to Claims 1 to 3, characterized in that the inlet chamber (5) is arranged between the drive diaphragm (3) and the valve diaphragm (2) and the outlet chamber (6) is arranged between the valve diaphragm (2) and base layer (1), and in that the inlet channel (7) and the outlet channel (8) are disposed opposite one another in a laterally offset manner.

5. Micromechanical valve according to Claim 1, characterized in that at least one connection element (10) which projects into the inlet chamber (5) as far as the drive diaphragm (3) and which is arranged at a distance from one another is connected unreleasably to the drive diaphragm (3) in the central region of the valve diaphragm (2), encircling the passage designed as passage hole (9).

6. Micromechanical valve according to Claims 1 and 5, characterized in that a valve wall (11) is arranged in the central region of the valve diaphragm (2), encircling the passage hole (9), at the outlet side, which valve wall (11) bears against the inner surface of the base layer (1) in the non-actuated state.

7. Micromechanical valve according to Claims 1 and 6, characterized in that a thin layer (12) of nonbondable material, such as silicon oxide or silicon nitrite, is arranged between the bearing surface of the valve wall (11) and the inner surface of the base layer (1).

8. Micromechanical valve according to Claims 1 to 7, characterized in that the base layer (1), valve diaphragm (2) and drive diaphragm (3) are unreleasably connected to one another, preferably by means of anodic bonding.

9. Micromechanical valve according to Claims 1 to 8, characterized in that the base layer (1) and drive diaphragm (3) preferably consists of a thermally adapted glass material and the valve diaphragm (2) consists of a semiconducting silicon substrate.

10. Micromechanical valve according to Claim 1, characterized in that the cover layer consists of a semiconducting silicon substrate, in the outer surface of which a recess for the actuation element (4) is formed, the remaining layer forms the drive diaphragm surface (13) an inlet chamber and outlet chamber (5, 6) are designed differently in shape and size.

11. Micromechanical valve according to Claim 10, characterized in that the cover layer and separating layer are connected unreleasably by means of wafer bonding and the separating layer is connected unreleasably to the base layer by anodic bonding.

12. Micromechanical valve according to Claims 1 to 11, characterized in that a piezoelectric diaphragm excitation element, preferably in the form of a piezodisc, is arranged as actuation element (4) by adhesion bonding onto the outer surface of the drive diaphragm (3).

13. Micromechanical valve according to Claims 1 to 12, characterized in that thermoelectric or electrostatic diaphragm excitation elements are arranged on the drive diaphragm (3) for activation of the valve diaphragm (2).

## Revendications

1. Valve micromécanique pour des systèmes de dosage micromécaniques, consistant en au moins trois couches disposées l'une au-dessus de l'autre et reliées les unes aux autres à poste fixe de façon non détachable, couches qui sont accouplées à un élément d'actionnement (4), les couches présentant des structures planes pour former des canaux d'entrée et de sortie (7, 8) ou des chambres d'entrée et de sortie (5, 6), les couches extérieures étant constituées comme une couche de base (1) et une couche de revêtement et la couche disposée entre l'orifice d'entrée et l'orifice de sortie étant constituée comme une membrane de valve (2) élastique, mince, valve micromécanique caractérisée en ce que la membrane de valve (2) élastique mince, est constituée des deux côtés avec des structures usinées dedans formant des canaux et des chambres pour l'orifice d'entrée et l'orifice de sortie, en ce que la membrane de la valve (2) présente un passage central (9), en ce que la membrane de la valve (2) est reliée d'une façon indétachable dans sa zone centrale avec la couche de revêtement constituée sous la forme d'une membrane mince d'entraînement (3, 13), en ce que la membrane de la valve (2) repose par sa zone centrale seulement quand la valve est en position fermée sur la face interne de la couche de base (1) , de telle sorte que l'arrivée de l'écoulement du fluide dans la valve ait lieu par un canal d'entrée (7), une chambre d'entrée (5) jusque dans le passage central (9) et que l'écoulement du fluide, quand la valve s'ouvre, ait lieu ensuite à travers la chambre de sortie (6) et le canal de sortie (8), et en ce que l'élément d'actionnement (4) est disposé sur la face extérieure de la membrane mince d'entraînement (3, 13).

2. Valve micromécanique selon la revendication 1, caractérisée en ce que la membrane élastique de la valve (2) est formée de telle façon que des deux côtés de la couche de séparation des structures formant l'ensemble des canaux et des chambres sont usinées de telle façon que les centres de gravité de leurs surfaces se trouvent les uns au-dessus des autres.

3. Valve micromécanique selon les revendications 1 et 2, caractérisée en ce que les chambres d'entrée et de sortie (5, 6) présentent sensiblement la même forme et la même grandeur.

4. Valve micromécanique selon les revendications 1 à 3, caractérisée en ce que la chambre d'entrée (5) est disposée entre la membrane d'entraînement (3)et la membrane de la valve (2) et la chambre de sortie (6) et la couche de base (1) et en ce que le canal d'entrée (7) et le canal de sortie (8) se trouvent en regard l'un de l'autre mais décalés latéralement.

5. Valve micromécanique selon la revendication 1, caractérisée en ce que dans la zone centrale de la membrane de la valve (2) autour du passage constitué comme un trou de passage (9) au moins un élément de liaison (10) qui fait saillie dans la chambre d'entrée (5) jusqu'à la membrane d'entraînement (3), disposé à une certaine distance les uns des autres, est relié de façon non détachable à la membrane d'entraînement (3)

6. Valve micromécanique selon les revendications 1 et 5, caractérisée en ce que dans la zone centrale de la membrane de la valve (2) autour du trou de passage (9) est disposée du côté de la sortie une paroi de valve (11), qui repose, quand la valve n'est pas actionnée, sur la face interne de la couche de base (1).

7. Valve micromécanique selon les revendications 1 et 6, caractérisée en ce qu'entre la face d'appui de la paroi (11) de la valve et la face interne de la couche de base (1) est disposée une couche mince (12) en matière ne pouvant pas faire le bonding,ou se souder telle que de la silice ou du nitrure de silicium.

8. Valve micromécanique selon les revendications 1 à 7, caractérisée en ce que la couche de base (1), la membrane de la valve (2) et la membrane d'entraînement (3) sont reliées de préférence les unes aux autres au moyen de liaisons anodiques de façon non détachable.

9. Valve micromécanique selon les revendications les revendications 1 à 8, caractérisée en ce que la couche de base (1) et la membrane d'entraînement (3) se composent de préférence d'une matière vitreuse adaptée thermiquement et la membrane de la valve (2) consiste en un substrat semi-conducteur en silicium.

10. Valve micromécanique selon la revendication 1, caractérisée en ce que la couche de revêtement consiste en un substrat semi-conducteur en silicium, dans la face extérieure duquel est usiné un évidement pour l'élément d'actionnement (4), en ce que la couche restante forme la face d'entraînement (13) et en ce que des chambres d'entrée et de sortie (5, 6) sont constituées avec des formes et des grandeurs différentes.

11. Valve micromécanique selon la revendication 10, caractérisée en ce que la couche de revêtement et la couche de séparation sont reliées au moyen de plalquettes de silicium de liaisons et la couche de séparation est reliée à la couche de base par des liaisons anodiques de façon non détachable.

12. Valve micromécanique selon les revendications 1 à 11, caractérisée en ce qu'un élément piézoélectrique d'excitation de la membrane en tant qu'élément d'actionnement (4) est disposé de préférence sous la forme d'un disque piézoélectrique par collage sur la face extérieure de la membrane d'entraînement (3).

13. Valve micromécanique selon les revendications 1 à 12, caractérisée en ce que pour commander la membrane de la valve (2) , on dispose des éléments d'excitation de la membrane thermoélectriques ou électrostatiques sur la membrane d'entraînement (3).
